# EUROPEAN PATENT APPLICATION

(11) **EP 1 524 647 A2**
(43) Date of publication of application: **20.04.2005**
(21) Application number: 04256258.7
(22) Date of filing: 08.10.2004
(51) Int. Cl.: G09G 3/36

(54) **Polarity inversion method for active matrix display apparatus**

(30) Priority: 13.10.2003 KR 2003071041
(71) Applicant: Samsung Electronics Co., Ltd., Suwon-si, Gyeonggi-do (KR)
(72) Inventor: Joo, Soong-Yong, Seongnam-si Gyeonggi-do (KR); Maeng, Ho-Suk, Seocho-gu Seoul (KR)
(74) Representative: Greene, Simon Kenneth

(57) **Abstract**

A display apparatus includes a display panel, a gate driver, a data driver and a line selection circuit. The display panel including a plurality of gate lines, and a plurality of data lines divided into a plurality of blocks. The gate driver outputs a scan signal that activates the gate lines in sequence. The data driver applies a data signal to the data lines by a unit of blocks during an active period which corresponds to a time when one of the gate lines is activated such that a polarity of data signals of i-th active period is opposite to a polarity of data signals of (i+2)-th period, wherein 'i' is a natural number. The line selection circuit differentiates timing for selecting the blocks per the gate lines and applies the data signal to the blocks of the data lines. Therefore, display is enhanced.

## Description

The present invention relates to a display apparatus, and method and device of driving the display apparatus.

A liquid crystal display apparatus includes, for example, a liquid crystal display panel having a plurality of gate lines and a plurality of data lines, a gate driving circuit that applies a gate driving signal to the gate lines, and a data driving circuit that applies an image signal to the data lines.

The gate driving circuit and the data driving circuit may be formed in a chip that may be mounted on the liquid crystal display panel.

Alternatively, the gate driving circuit may be directly formed on the liquid crystal display panel to reduce a size of the liquid crystal display apparatus and enhance productivity. The gate driving circuit may include a shift register having a plurality of stages connected in series. Each of the stages corresponds to the gate line in one-to-one manner. An output of each of the stages is applied to a corresponding gate line.

When the gate driving circuit is formed through a process of manufacturing the liquid crystal display panel, a resolution may be enhanced by increasing a number of the stages.

However, when the data driving circuit is formed in a chip type that is to be mounted on the liquid crystal display panel, changing the driving circuit according to an enhancement of the resolution is very hard.

In order to solve the above-mentioned problem, a selecting part for multiplexing the data signal outputted from the data driving circuit is formed directly on the liquid crystal display panel. The selecting part applies data signals to the data lines that are partitioned to form blocks with a clock time difference.

However, when the liquid crystal display apparatus employs the selecting part, a bright line appears between boundaries of the blocks to deteriorate a display quality.

In an exemplary display apparatus according to the present invention, the display apparatus includes a display panel, a gate driver, a data driver and a line selection circuit. The display panel including a plurality of gate lines, and a plurality of data lines divided into a plurality of blocks. The gate driver outputs a scan signal that activates the gate lines in sequence. The data driver applies a data signal to the data lines by a unit of blocks during an active period which corresponds to a time when one of the gate lines is activated such that a polarity of data signals of i-th active period is opposite to a polarity of data signals of (i+2)-th period, wherein 'i' is a natural number. The line selection circuit differentiates timing for selecting the blocks per the gate lines and applies the data signal to the blocks of the data lines.

In an exemplary method of driving a display apparatus including a display panel having n-number of gate lines, and m-number of data lines divided into a plurality of blocks. i-th gate line of the gate lines is activated. Data signals are applied to the data lines by unit of blocks when the i-th gate line is activated. (i+1)-th gate line of the gate lines is activated. Data signals are applied to the data lines by unit of blocks when the (i+1)-th gate line is activated. (i+2)-th gate line of the gate lines is activated. Then, data signals are applied to the data lines by unit of blocks when the (i+2)-th gate line is activated, such that a polarity of data signals applied to the data lines when the i-th gate line is activated is opposite to a polarity of data signals applied to the data lines when the (i+2)-th gate line is activated.

In another exemplary method of driving a display apparatus including a display panel having a plurality of gate lines, a plurality of data lines divided into a plurality of blocks having at least two data lines and a plurality of pixels, a second data signal is applied to the data lines of a second block after applying a first data signal to the data lines of a first block when the gate lines of a first group are activated. Then, a fourth data signal is applied to the data lines of the first block after applying a third data signal to the data lines of the second block when the gate lines of a second group are activated.

In still another exemplary method of driving a display apparatus, two continuous data signals of same polarity along a first arrangement direction are applied to pixels alternately, and two continuous data signals of same polarity along a second arrangement direction crossing the first arrangement direction are applied to pixels alternately to display bright and dark pixels alternately along the first and second arrangement directions.

In an exemplary driver of a display apparatus, including a plurality of gate lines, data lines divided into blocks having at least two data lines, and a plurality of pixels, the driver applies a second data signal to the data lines of a block after applying a first data signal to the data lines of a first block when the gate lines of a first group are activated, and applies a fourth data signal to the data lines of the first block after applying a third data signal to the data lines of the second block when the gate lines of a second group are activated.

Therefore, a bright pixel region and a dark pixel region are alternately formed to offset the difference. Therefore, a luminance of the liquid crystal display apparatus is uniformized to enhance a display quality.

The present invention aims to provide a display apparatus with enhanced display quality.

The present invention also provides a method of driving a display apparatus.

The present invention still also provides a driver of driving a display apparatus.

The above and other features and advantages of the present invention will become more apparent by describing in detailed exemplary embodiments thereof with reference to the accompanying drawings, in which:
FIG. 1 is a block diagram illustrating a liquid crystal display apparatus according to an exemplary embodiment of the present invention;
FIG. 2 is a schematic diagram illustrating a line selection circuit in FIG. 1;
FIGS. 3A and 3B are graphs illustrating waveforms of first and second selecting signals outputted from a gate driver in FIG. 1, respectively;
FIGS. 3C and 3D are graphs illustrating waveforms of output patterns of first and third gate lines in n-number of gate lines, respectively;
FIGS. 4A and 4B are graphs illustrating first and second selection signals outputted from a gate driver in FIG. 1, respectively;
FIGS. 4C and 4D are graphs illustrating waveforms of output patterns of second and fourth gate lines in n-number of gate lines, respectively;
FIGS. 5A to 5D are graphs illustrating output signal of a line selection circuit in odd-numbered frames;
FIG. 6 is a schematic view illustrating a polarity of a data signal of each pixel region;
FIGS. 7A to 7D are graphs illustrating output signal of a line selection circuit in even-numbered frames; and
FIG. 8 is a schematic view illustrating a polarity of a data signal of each pixel region.

Hereinafter, the embodiments of the present invention will be described in detail with reference to the accompanied drawings.

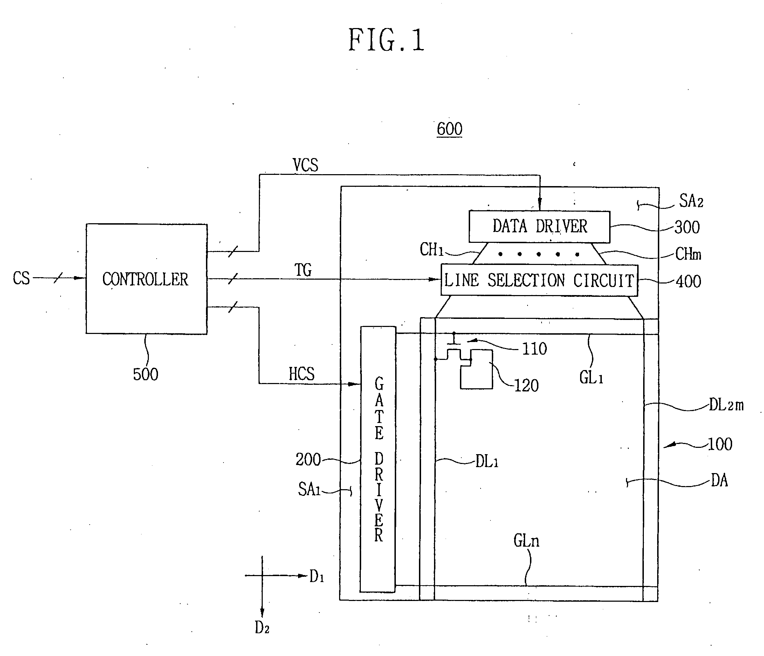

FIG. 1 is a block diagram illustrating a liquid crystal display apparatus according to an exemplary embodiment of the present invention.

Referring to FIG. 1, a liquid crystal display apparatus 600 according to an exemplary embodiment of the present invention includes a gate driver 200, a data driver 300 and a liquid crystal display panel 100 that displays an image. A line selection circuit 400 drives the liquid crystal display panel 100.

A controller 500 outputs a horizontal control signal HCS for controlling the gate driver 200, a vertical control signal VCS for controlling the data driver 300 and a selection control signal TG for controlling the line selection circuit 400.

The liquid crystal display panel 100 includes a first substrate, a second substrate facing the first substrate and a liquid crystal layer interposed between the first and second substrates. A region of the liquid crystal display panel 100 includes a display region DA for displaying an image, first and second peripheral regions SA1 and SA2 disposed adjacent to the display region DA.

The display region DA includes a gate line group having first to n-th gate lines GL1 to GLn, and a data line group having first to 2m-th data lines DL1 to DLm, wherein 'm' and 'n' are natural numbers greater than one. The gate lines GL1 to GLn are extended in a first direction D1, and the data lines DL1 to DL2m are extended in a second direction D2 that is substantially perpendicular to the first direction D1.

A thin film transistor (TFT) 110 and a pixel electrode 120 are formed in 2m x n regions defined by the gate lines GL1 to GLn and the data lines DL1 to DL2m.

The TFT 110 includes a gate electrode that is electrically connected to one of the gate lines GL1, a source electrode that is electrically connected to one of the data lines DL1, and a drain electrode that is electrically connected to the pixel electrode 120.

The first peripheral region SA1 is adjacent to one end of the gate lines GL1 to GLn. The gate driver 200 is formed in the first peripheral region SA1 through a process through which the TFT 110 is formed. The gate driver 200 applies scan signals to the first gate line GL1 to n-th gate line GLn in sequence.

The second peripheral region SA2 is adjacent to one end of the data lines DL1 to DL2m. The data driver 300 and the line selection circuit 400 are formed in the second peripheral region SA2. For example, the data driver 300 is formed in a chip that is mounted on the second peripheral region SA2. The line selection circuit 400 is formed through the process through which the TFT 110 is formed.

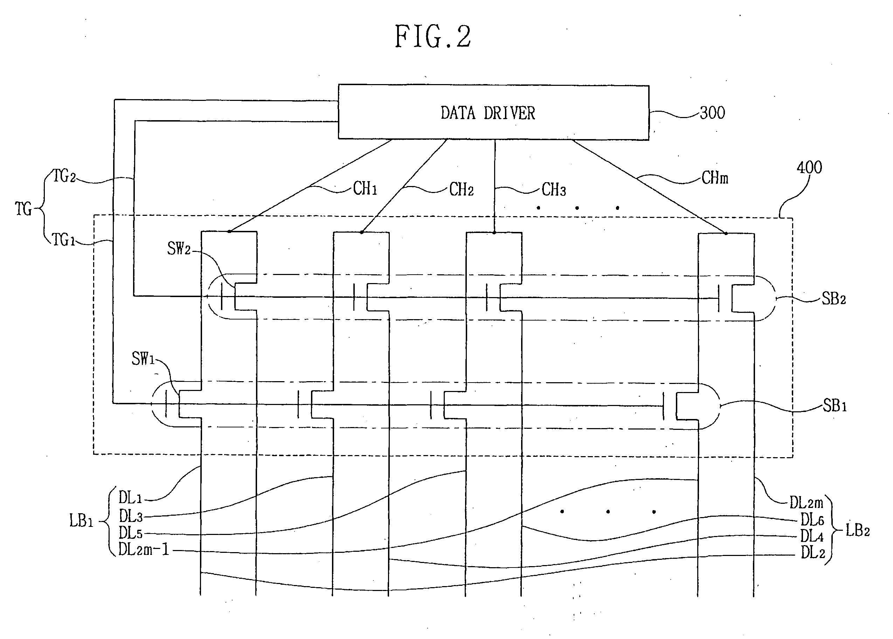

FIG. 2 is a schematic diagram illustrating a line selection circuit in FIG. 1.

Referring to FIG. 2, the data lines DL1 to DL2m formed in the display region DA include, for example, a first line block LB1 having odd numbered data lines DL1, DL3, ... DL2m-1, and a second line block LB2 having even numbered data lines DL2, DL4, ... DL2m. Alternatively, the first and second line blocks LB1 and LB2 may include arbitrary m-number of data lines, respectively.

The data driver 300 outputs data signal through m-number of channels CH1 to CHm by a unit of block. The line selection circuit 400 includes the first selection block SB1 that is electrically connected to the first line block LB1, and a second selection block SB1 that is electrically connected to the second line block LB2. The line selection circuit 400 applies the data signal outputted from the data driver 300 by a unit of block to the first and second line blocks LB1 and LB2 with a clock time difference.

The first selection block SB1 is disposed between the channels CH1 to CHm and the first line block LB1. The first selection block SB1 applies the data signal to the first line block LB1 in response to the first selection signal TG1 outputted from the data driver 300.

The second selection block SB2 is disposed between the channels CH1 to CHm and the second line block LB2. The second selection block SB2 applies the data signal to the second line block LB2 in response to the second selection signal TG2 outputted from the data driver 300.

For example, the first and second selection signals TG1 and TG2 have opposite phase to each other. Therefore, the first and second selection blocks SB1 and SB2 are alternately turned on. That is, the line selection circuit 400 applies the data signal to the first and second line blocks LB1 and LB2 alternately.

The first and second selection blocks SB1 and SB2 include a plurality of first and second selection switching devices SW1 and SW2, respectively. A transistor, for example, may be employed as the first and second switching devices SW1 and SW2.

The first switching device SW1 receives the first selection signal TG1 from the data driver 300 through a gate electrode, receives the data signal from the data driver through a source electrode, and applies the data signal to the odd numbered data lines DL1, DL3, ..., DL2m-1 of the first line block LB1 through a drain electrode.

The second switching device SW2 receives the second selection signal TG2 from the data driver 300 through a gate electrode, receives the data signal from the data driver through a source electrode, and applies the data signal to the even numbered data lines DL2, DL4, ..., DL2m of the second line block LB2 through a drain electrode.

In FIG. 2, the data lines DL1 to DL2m have, for example, a number that is two times greater than a number of the channels CH1 to CHm. Alternatively, the data lines may have three times or four times greater than the number of the channels CH1 to CHm. Then, the line selection circuit 300 applies the data signal to data line groups formed by dividing the data lines into three or four groups, and applies the data signal to the data line groups.

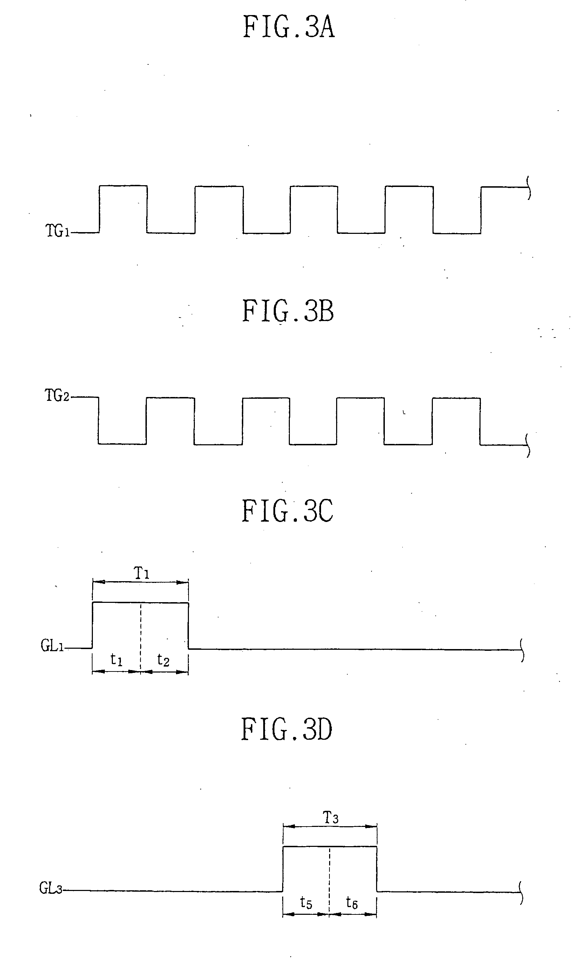

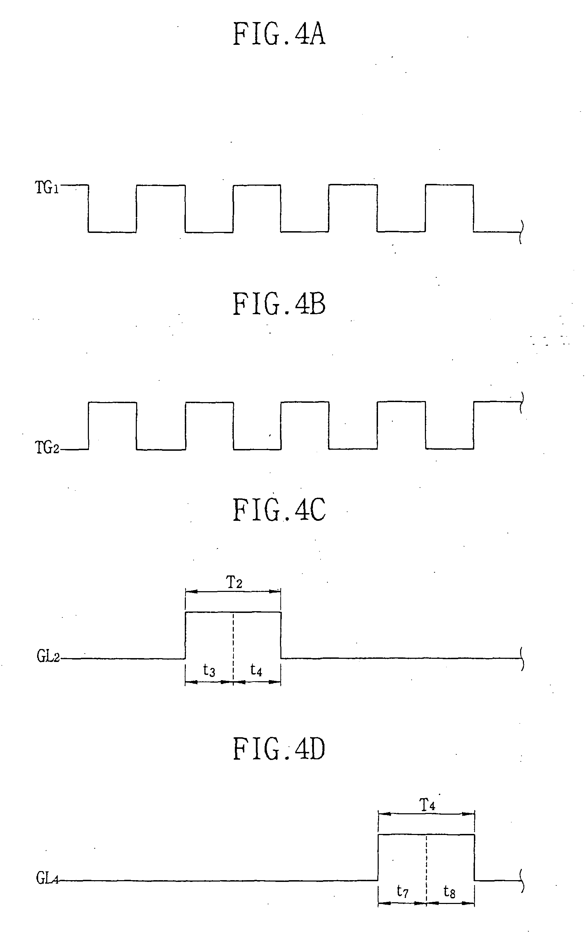

FIGS. 3A and 3B are graphs illustrating waveforms of first and second selecting signals outputted from a gate driver in FIG. 1, respectively. FIGS. 3C and 3D are graphs illustrating waveforms of output patterns of first and third gate lines in n-number of gate lines, respectively. FIGS. 4A and 4B are graphs illustrating first and second selection signals outputted from a gate driver in FIG. 1, respectively. FIGS. 4C and 4D are graphs illustrating waveforms of output patterns of second and fourth gate lines in n-number of gate lines, respectively.

Referring to FIGS. 3A to 3D, when the scan signal is applied to the first gate line GL1, the first and second selection signals TG1 and TG2 have a high leveled state alternately. In detail, a first active period T1 during which the scan signal is applied to the first gate line GL1 includes a first selection period t1 during which the first selection signal TG1 is high, and a second selection period t2 during which the second selection signal TG2 is high. For example, the first and second selection periods t1 and t2 have a half-length of the first active period T1.

A third active period T3 during which the scan signal is applied to the third gate line, GL3 includes a fifth selection period t5 during which the first selection signal TG1 is high, and a sixth selection period t6 during which the second selection signal TG2 is high. For example, the fifth and sixth selection periods t5 and t6 have a half-length of the third active period T3.

Referring to FIGS. 4A to 4D, a second active period T2 during which the scan signal is applied to the second gate line GL2 includes a third selection period t3 during which the second selection signal TG2 is high, and a fourth selection period t4 during which the first selection signal TG1 is high. For example, the third and fourth selection periods t3 and t4 have a half-length of the first active period T2.

A fourth active period T4 during which the scan signal is applied to the fourth gate line GL4 includes a seventh selection period t7 during which the second selection signal TG2 is high, and a eighth selection period t8 during which the first selection signal TG1 is high. For example, the seventh and eighth selection periods t7 and t8 have a half-length of the fourth active period T4.

During the active periods T1 and T3 of the odd number gate lines GL1 and GL3, the first selection block SB1 is firstly turned on in response to the first selection signal TG1, and then the second selection block SB2 is turned on in response to the second selection signal TG2. During the active periods T2 and T4 of the even number gate lines GL2 and GL4, the second selection block SB2 is firstly turned on in response to the second selection signal TG2, and then the first selection block SB1 is turned on in response to the first selection signal TG1.

Alternatively, during the active periods T1 and T3 of the odd number gate lines GL1 and GL3, the second selection block SB2 is firstly turned on in response to the second selection signal TG2, and then the first selection block SB1 is turned on in response to the first selection signal TG1. During the active periods T2 and T4 of the even number gate lines GL2 and GL4, the first selection block SB1 is firstly turned on in response to the first selection signal TG1, and then the second selection block SB2 is turned on in response to the second selection signal TG2.

Therefore, the data signal may be applied to the first and second line blocks LB1 and LB2 with a clock time difference at the first to fourth active periods T1 to T4. A sequence for selecting the first and second line blocks LB1 and LB2 may be changed according to the gate line.

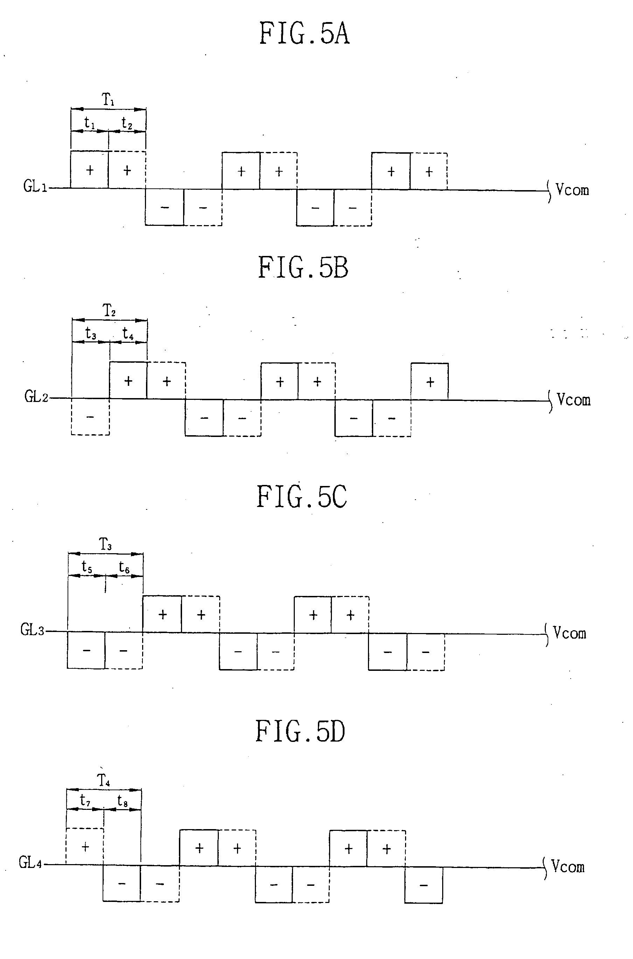

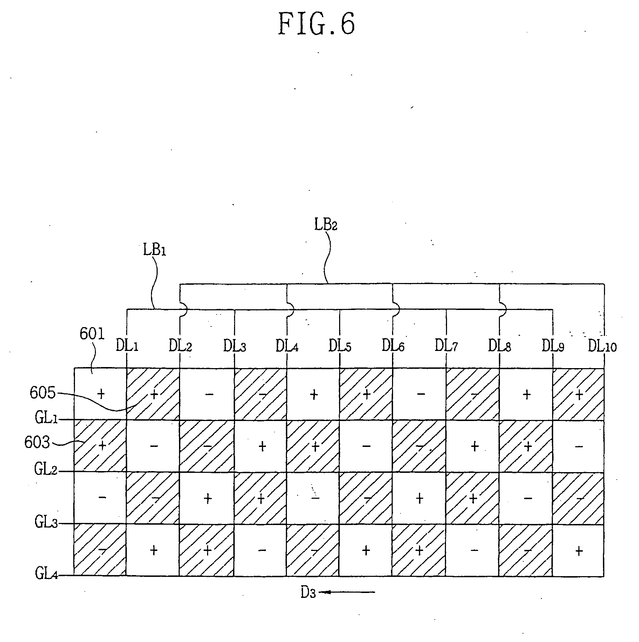

FIGS. 5A to 5D are graphs illustrating output signal of a line selection circuit in odd-numbered frames, and FIG. 6 is a schematic view illustrating a polarity of a data signal of each pixel region. Hereinafter, 'one frame' is referred to a time from a first time point at which a scan signal is applied to the first gate line to a last time point at which the scan signal is applied to the last gate line. That is, 'one frame' is a time for activating the first gate line to the last gate line. For example, when the frame changed 64 times per a second, 'odd frames' referred to odd numbered frames of 64 frames.

For convenience, only first to fourth gate lines GL1 to GL4 on n-th gate lines, and only first to tenth data lines DL1 to DL10 of 2m-th data lines are shown.

In FIG. 5, a solid line represents a first data signal applied to the data lines of the first block, and a dotted line represents a second data signal applied to the data lines of the second block.

In FIG. 6, a hatched region corresponds to bright pixel regions 603 and 605, and non-hatched region corresponds to a dark pixel region 601.

Referring to FIGS. 5A to 6, the scan signal is applied to the first gate line GL1 during the first active period T1 in FIG. 3. In detail, the first data signal is applied to the first line block LB1 in FIG. 2 during the first selection period t1 of the first active period T1, and the second data signal is applied to the second line block LB2 during the second selection period t2 of the first active period T1.

The first data signal is applied to the first line block LB1 in response to the first selection signal TG1 that is high in the first selection period t1. The second data signal is applied to the second line block LB2 in response to the second selection signal TG2 that is high in the second selection period t2.

That is, when the odd numbered gate lines GL1 and GL3 are activated, the data signal is firstly applied to the odd numbered gate lines, and then the data signal is applied to the even numbered gate lines.

On the contrary, when the even numbered gate lines GL2 and GL4 are activated, the data signal is applied firstly to the even number gate lines, and then the data signal is applied to the odd numbered gate lines.

For example, a positive polarity of the first and second data signals has a higher voltage than a common voltage Vcom, and a negative polarity of the first and second data signals has a lower voltage than the common voltage Vcom.

For example, the first data signal of positive polarity is applied to the first, fifth and ninth data lines DL1, DL5 and DL9 and the first data signal of negative polarity is applied to the third and seventh data lines DL3 and DL7 during the first selection period t1. The second data signal of positive polarity is applied to the second, sixth and tenth data lines DL2, DL6 and DL10 and the second data signal of negative polarity is applied to the fourth and eighth data lines DL4 and DL8 during the second selection period T2.

During the first active period T1, the first data signal applied to the first line block LB1 and the second data signal applied to the second line block LB2 have same polarity.

Then, the scan signal is applied to the second gate line GL2 during the second active period T2 and the second data signal is applied to the second line block LB2 during the third selection period t3 of the second active period T2. The first data signal is applied to the first line block LB1.

For example, during the third selection period t3, the second data signal of negative polarity is applied to the second, sixth and tenth data lines DL2, DL6 and DL10 and the second data signal of positive polarity is applied to the fourth and eighth data lines DL4 and DL8. During the fourth selection period t4, the first data signal of positive polarity is applied to the first, fifth and ninth data lines DL1, DL5 and DL9 and the first data signal of negative polarity is applied to the third and seventh data lines DL3 and DL7.

During the second active period T2, a polarity of the first and second data signals is same as a polarity of a signal of the first and second data signals outputted in the first active period T1 and shifted in a third direction D3 in FIG. 6 by one pixel region. That is, the second data signal applied to the second line block LB2 during the first active period T1 is applied to the first line block LB1 as the first data signal during the second active period T2. Therefore, the first data signal applied to the first line block LB1 during the second active period T2 has a different polarity from a polarity of the second data signal applied to the second line block LB2.

Then, the scan signal is applied to the third gate line GL3 during the third active period T3 and the first data signal is applied to the first line block LB1 during the fifth selection period t5 of the third active period T3. The second data signal is applied to the second line block LB2 during the sixth selection period.

For example, the first data signal of negative polarity is applied to the first, fifth and ninth data lines DL1, DL5 and DL9 ,and the first data signal of positive polarity is applied to the third and seventh data lines DL3 and DL7 during the fifth selection period t5.

For example, the second data signal of negative polarity is applied to the second, sixth and tenth data lines DL2, DL6 and DL10, and the second data signal of positive polarity is applied to the fourth and eighth data lines DL4 and DL8 during the sixth selection period t6.

During the third active period T3, a polarity of the first and second data signals is same as a polarity of a signal of the first and second data signals outputted in the second active period T2 and shifted in the third direction D3 in FIG. 6 by one pixel region. Therefore, the first data signal applied to the first line block LB1 during the third active period T3 has a same polarity as a polarity of the second data signal applied to the second line block LB2.

During the fourth active period T4, the scan signal is applied to the fourth gate line GL4, and the second data signal is applied to the second line block LB2 during the seventh selection period t7 of the fourth active period T4. The first data signal is applied to the first line block LB1 during the eighth selection period t8 of the fourth active period T4.

For example, the second data signal of positive polarity is applied to the second, sixth and tenth data lines DL2, DL6 and DL10, and the second data signal of negative polarity is applied to the fourth and eighth data lines DL4 and DL8 during the seventh selection period t7.

For example, the first data signal of negative polarity is applied to the first, fifth and ninth data lines DL1, DL5 and DL9, and the first data signal of positive polarity is applied to the third and seventh data lines DL3 and DL7 during the eighth selection period t8.

During the fourth active period T4, a polarity of the first and second data signals is same as a polarity of a signal of the first and second data signals outputted in the third active period T3 and shifted in the third direction D3 in FIG. 6 by one pixel region. Therefore, the first data signal applied to the first line block LB1 during the fourth active period T4 has a different polarity from a polarity of the second data signal applied to the second line block LB2.

As shown in FIGS. 5A to 6, the bright pixel regions 603 and 605 and the dark pixel region 601 are formed alternately on a screen of the liquid crystal display apparatus. Therefore, the bright pixel regions 603 and 605 offset the dark region 601 to uniformize luminance of the liquid crystal display apparatus.

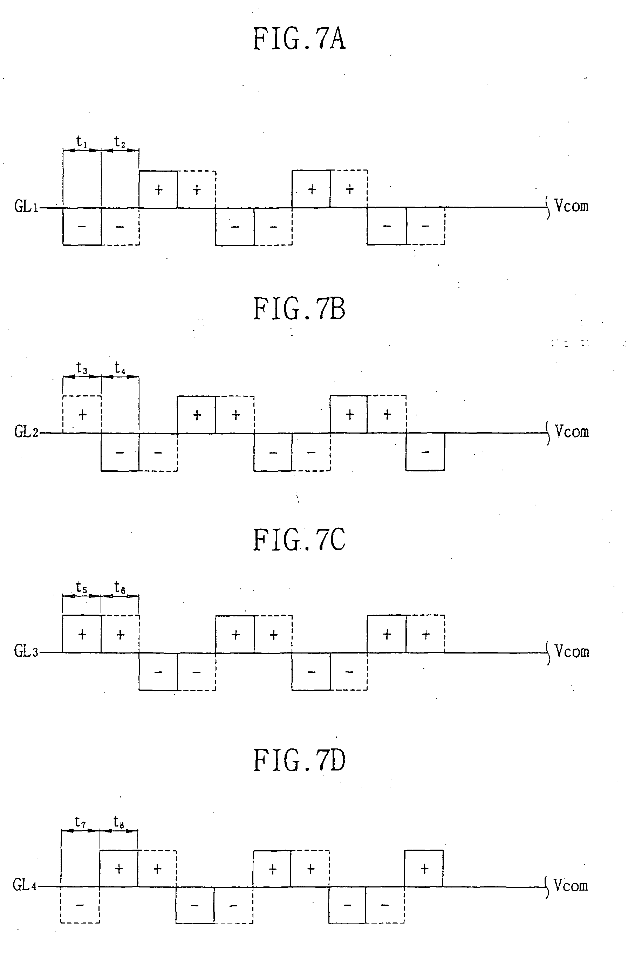

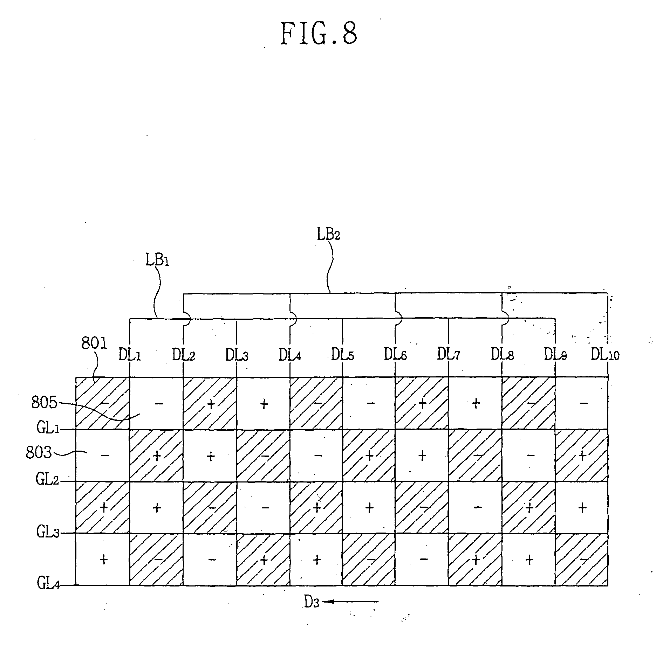

FIGS. 7A to 7D are graphs illustrating output signal of a line selection circuit in even-numbered frames, and FIG. 8 is a schematic view illustrating a polarity of a data signal of each pixel region. 'Even frames' represent even numbered frames of 64 frames.

In FIGS. 7A to 7D, a solid line represents a first data signal applied to the data lines of the first block, and a dotted line represents a second data signal applied to the data lines of the second block.

In FIG. 8, a hatched region corresponds to bright pixel regions 803 and 805, and non-hatched region corresponds to a dark pixel region 801.

Referring to FIGS. 7A to 8, the first data signal of a negative polarity is applied to the first, fifth and ninth data lines DL1, DL5 and DL9, and the first data signal of a positive polarity is applied to the third and seventh data lines DL3 and DL7 during the first selection period t1 of the first active period T1 during which the scan signal is applied to the first gate line GL1. Then, the second data signal of a negative polarity is applied to the second, sixth and tenth data lines DL2, DL6 and DL10 and the second data signal of a positive polarity is applied to the fourth and eighth data lines DL4 and DL8 during the second selection period t2.

For example, the first data signal of a positive polarity is applied to the second, sixth and tenth data lines DL2, DL6 and DL10, and the first data signal of a negative polarity is applied to the fourth and eighth data lines DL4 and DL8 during the third selection period of the second active period T2 during which the scan signal is applied to the second gate line GL2. Then, the second data signal of a negative polarity is applied to the first, fifth and ninth data lines DL1, DL5 and DL9 and the second data signal of a positive polarity is applied to the third and seventh data lines DL3 and DL7.

For example, the first data signal of a positive polarity is applied to the first, fifth and ninth data lines DL1, DL5 and DL9 and the first data signal of a negative polarity is applied to the third and seventh data lines DL3 and DL7 during the fifth selection period t5 of the third active period T3 during which the scan signal is applied to the third gate line GL3. Then, the second data signal of a positive polarity is applied to the second, sixth and tenth data lines DL2, DL6 and DL10, and the second data signal of a negative polarity is applied to the fourth and eighth data lines DL4 and DL8 during the sixth selection period.

For example, the second data signal of a negative polarity is applied to the second, sixth and tenth data lines DL2, DL6 and DL10, and the second data lines of a positive polarity is applied to the fourth and eighth data lines DL2 and DL8 during the seventh selection period t7 of the fourth active period T4 during which the scan signal is applied to the fourth gate line GL4. Then, the first data signal of a positive polarity is applied to the first, fifth and ninth data lines DL1, DL5 and DL9, and the first data signal of a negative polarity is applied to the third and seventh data lines DL3 and DL7 during the eighth selection period t8.

As described above, the bright pixel regions 803 and 805 and the dark pixel region 801 are formed alternately on a screen of the liquid crystal display apparatus. Therefore, the bright pixel regions 803 and 805 offset the dark region 801 to uniformize luminance of the liquid crystal display apparatus.

As shown in FIGS. 5A to 7D, a polarity of the data signal applied to the pixel at odd frames is different from a polarity of the data signal applied to the pixel at even frames. However, the bright pixel regions 603 and 605 of the odd frames correspond to the bright pixel regions 803 and 805 of the even frames. Therefore, the liquid crystal displays apparatus displays an image of which luminance is uniform even when the frame is changed.

In FIGS. 2 to 8, a number of the data lines formed on the liquid crystal display panel is two times greater than a number of output terminals of the data driver. Therefore, the data lines are divided into two blocks. Alternatively, as a resolution increases, the number of the data lines may be three, four or more times greater than the number of the output terminals of the data driver.

According to the display apparatus and method of driving the display apparatus, m-number of data signals are divided into m/i number of data signals. A polarity of each m/i number of data signals is shifted and the data driver outputs the m/i number of data signals i-times. The line selection circuit applies the m/i number of data signals to each block and varies a time for selecting the block.

Therefore, the bright pixel region and the dark pixel region are alternately formed to offset the difference. Therefore, a luminance of the liquid crystal display apparatus is uniformized to enhance a display quality.

Having described the exemplary embodiments of the present invention and its advantages, it is noted that various changes, substitutions and alterations can be made herein without departing from the scope of the invention as defined by appended claims.

## Claims

1. A display apparatus comprising:
a display panel including a plurality of gate lines, and a plurality of data lines divided into a plurality of blocks;
a gate driver outputting a scan signal that activates the gate lines in sequence;
a data driver applying a data signal to the data lines in units of blocks during an active period which corresponds to a time when one of the gate lines is activated such that a polarity of data signals of the i-th active period is opposite to a polarity of data signals of the (i+2)-th period, wherein 'i' is a natural number; and
a line selection circuit differentiating timing for selecting the blocks by the gate lines and applying the data signal to the blocks of the data lines.

2. The display apparatus of claim 1, wherein a total number of the data lines is 'm', and the data lines are divided into a first block having m/2-number of data lines and a second block having m/2-number of data lines.

3. The display apparatus of claim 2, wherein the first block comprises odd numbered data lines and the second block comprises even numbered data lines.

4. The display apparatus of claim 2 or 3, wherein the line selection circuit comprises:
a first selection part that provides the first block with the data signal in response to a first selection signal; and
a second selection part that provides the second block with the data signal in response to a second selection signal.

5. The display apparatus of claim 4, wherein the first and second selection signals have opposite phase to each other.

6. The display apparatus of any of claims 3 to 5, wherein the line selection circuit provides the first block with the data signal and then provides the second block with the data signal during an active period of the odd numbered gate lines.

7. The display apparatus of any of claims 3 to 6, wherein the line selection circuit provides the second block with the data signal and then provides the first block with the data signal during an active period of the even numbered gate lines.

8. The display apparatus of any of claims 2 to 7, wherein the data signal has a first polarity that is higher than a common voltage and a second polarity that is lower than the common voltage.

9. The display apparatus of claim 8, wherein a polarity of the data signal applied to the first block is same as a polarity of the data signal applied to the second block during an active period of odd numbered gate lines, and a polarity of the data signal applied to the first block is different from a polarity of the data signal applied to the second block during an active period of even numbered gate lines.

10. The display apparatus of claim 8 or 9, wherein the data driver applies the data signal of the first polarity to each of the data lines at a present frame, and applies the data signal of the second polarity to each of the data lines at a next frame, wherein a frame corresponds to time interval between a first time point at which the gate driver applies scan signal to the first gate line and a second time point at which the gate driver applies scan signal to the last gate line.

11. The display apparatus of any of claims 2 to 10, wherein a polarity of the data signals applied to the second block during an active period of a previous active line is same as a polarity of the data signals applied to the first block during an active period of a present gate line.

12. A method of driving a display apparatus including a display panel having n-number of gate lines, and m-number of data lines divided into a plurality of blocks, comprising:
activating an i-th gate line of the gate lines;
applying data signals to the data lines in units of blocks when the i-th gate line is activated;
activating an (i+1)-th gate line of the gate lines;
applying data signals to the data lines in units of blocks when the (i+1)-th gate line is activated;
activating an (i+2)-th gate line of the gate lines; and
applying data signals to the data lines in units of blocks when the (i+2)-th gate line is activated, such that a polarity of data signals applied to the data lines when the i-th gate line is activated is opposite to a polarity of data signals applied to the data lines when the (i+2)-th gate line is activated,
wherein 'n' and 'm' are natural numbers equal to or more than 2, and 'i' is equal to or less than n-2.

13. The method of claim 12, wherein the data lines are divided into a first block having m/2-number of data lines and a second block having m/2-number of data lines.

14. The method of claim 13, wherein the data signals are applied to the first block during an active period of odd numbered gate lines and then the data signals are applied to the second block.

15. The method of claim 14, wherein the data signals are applied to the second block during an active period of even numbered gate lines and then the data signals are applied to the first block.

16. The method of claim 13, 14 or 15, wherein a polarity of the data signals applied to the second block during an active period of a previous active line is same as a polarity of the data signals applied to the first block during an active period of a present gate line.

17. A method of driving a display apparatus including a display panel having a plurality of gate lines, a plurality of data lines divided into a plurality of blocks having at least two data lines and a plurality of pixels, comprising:
applying a second data signal to the data lines of a second block after applying a first data signal to the data lines of a first block when the gate lines of a first group are activated; and
applying a fourth data signal to the data lines of the first block after applying a third data signal to the data lines of the second block when the gate lines of a second group are activated.

18. The method of claim 17, wherein the first and second data signals have alternating polarity per the gate lines of the first group.

19. The method of claim 17 or 18, wherein the third and fourth data signals have alternating polarity per the gate lines of the second group.

20. The method of claim 17, 18 or 19, wherein the data signals of the first and second blocks have same polarity to each other during an active period of the gate lines of the first group, and the data signals of the first and second blocks have different polarity from each other during an active period of the gate lines of the second group.

21. The method of any of claims 17 to 20, wherein a polarity of the data signals applied to each pixel during odd numbered frames is opposite to a polarity of data signals applied to each pixel during even numbered frames, wherein a frame corresponds to time interval between a first time point at which the gate driver applies scan signal to the first gate line and a second time point at which the gate driver applies scan signal to the last gate line.

22. The method of any of claims 17 to 21, wherein two continuous data signals of same polarity along a first arrangement direction are applied to pixels alternately, and two continuous data signals of same polarity along a second arrangement direction that crosses the first arrangement direction are applied to pixels alternately.

23. The method of any of claims 17 to 22, wherein bright pixels of the pixels and dark pixels of the pixels are arranged alternately along a first arrangement direction and a second arrangement direction that crosses the first arrangement direction.

24. The method of any of claims 17 to 23, wherein the first group corresponds to odd numbered gate lines, and the second group corresponds to even numbered gate lines.

25. A method of driving a display apparatus, comprising:
applying two continuous data signals of same polarity along a first arrangement direction to pixels alternately, and applying two continuous data signals of same polarity along a second arrangement direction crossing the first arrangement direction to pixels alternately to display bright and dark pixels alternately along the first and second arrangement directions.

26. A driver that drives a display apparatus including a plurality of gate lines, data lines divided into blocks having at least two data lines, and a plurality of pixels, wherein the driver applies a second data signal to the data lines of a block after applying a first data signal to the data lines of a first block when the gate lines of a first group are activated, and applies a fourth data signal to the data lines of the first block after applying a third data signal to the data lines of the second block when the gate lines of a second group are activated.
